# EUROPÄISCHE PATENTSCHRIFT

(11) **EP 3 523 842 B1**
(45) Veröffentlichungstag und Bekanntmachung des Hinweises auf die Patenterteilung: **05.07.2023**
(21) Anmeldenummer: 17784906.4
(22) Anmeldetag: 04.10.2017
(51) Int. Cl.: H01M 10/48, H01M 10/0587, H01M 50/24, H01M 50/30, H01M 50/211, H01M 50/227, H01M 50/516, H01M 50/524, H01M 50/569, H01M 10/04, H01M 10/052

(54) **ENERGIESPEICHERMODUL UND VERFAHREN ZUM HERSTELLEN HIERVON**
ENERGY STORAGE MODULE AND METHOD FOR PRODUCTION THEREOF
MODULE ACCUMULATEUR D'ÉNERGIE ET PROCÉDÉ DE FABRICATION

(30) Priorität: 04.10.2016 DE 102016118752
(43) Veröffentlichungstag der Anmeldung: 14.08.2019
(73) Patentinhaber: Clarios Advanced Solutions GmbH, 30419 Hannover (DE)
(72) Erfinder: BRENNER, Helge, 30453 Hannover (DE); JOSWIG, Ralf, 29690 Buchholz (DE); HOH, Markus, 31515 Wunstorf (DE)
(74) Vertreter: Meissner Bolte Partnerschaft mbB
(86) Internationale Anmeldenummer: PCT/EP2017/075123
(87) Internationale Veröffentlichungsnummer: WO 2018/065437

(56) Entgegenhaltungen:
- WO-A1-2015/140952
- WO-A1-2015/140952
- JP-A- 2002 151 026
- JP-A- 2004 071 302
- JP-A- 2004 071 302
- JP-A- 2006 079 909
- US-A1- 2015 064 521
- US-A1- 2015 064 521
- US-A1- 2016 248 052
- US-A1- 2016 248 052

## Beschreibung

Die vorliegende Anmeldung betrifft ein kontinuierliches Fertigungsverfahren für ein Energiespeichermodul.

Üblicherweise wird bei der Herstellung von Energiespeichermodulen zunächst eine Vielzahl von Energiespeicherzellen produziert. Hierfür wird eine Vielzahl von Elektroden und Separatoren innerhalb eines Zellengehäuses angeordnet und verschlossen. Anschließend müssen die einzelnen Energiespeicherzellen in einem Modulgehäuse angeordnet und elektrisch verbunden werden. Dies geschieht herkömmlicherweise über eine Sammelschiene, welche mit den einzelnen Zellen elektrisch leitfähig verbunden werden muss, insbesondere durch Verschweißen. Erst dann kann das Energiespeichermodul verschlossen werden und beispielsweise in ein Energiespeichersystem eingebaut werden.

Ein solches Herstellungsverfahren weist allerdings den Nachteil auf, dass es durch die hohe Anzahl an voneinander unabhängigen Fertigungsschritten sowohl zeitintensiv, als auch aufwendig ist. Dies steigert darüber hinaus die Kosten für das Herstellungsverfahren, genauso wie die Kosten für das Energiespeichersystem beziehungsweise das Energiespeichermodul.

Vorbekannte Herstellungsverfahren gattungsgemäßer Energiespeichermodule werden unter anderen in der WO 2015/140952 A1 bzw. EP 3 121 881 A1, US 2015/064521 A1, JP 2004-071302 A und US 2016/248052 A1 offenbart.

Der Erfindung liegt daher die Aufgabe zugrunde, ein Herstellungsverfahren für ein verbessertes, leistungsstarkes und platzsparendes Energiespeichermodul bereitzustellen, welches die Nachteile des Standes der Technik nicht aufweist und einfach und kostengünstig ist.

Im Hinblick auf das Verfahren zum Herstellen eines solchen Energiespeichermoduls wird die der Erfindung zugrunde liegende Aufgabe erfindungsgemäß durch den Gegenstand des nebengeordneten Patentanspruchs 1 gelöst. Vorteilhafte Weiterbildungen sind in den abhängigen Patentansprüchen angegeben.

Demnach wird ein Energiespeichermodul, welches über ein kontinuierliches Fertigungsverfahren hergestellt ist, angegeben. Das Energiespeichermodul weist hierbei eine Vielzahl von elektrisch in Reihe geschalteten Energiespeicherzellen und ein zumindest bereichsweise, und vorzugsweise vollständig, aus Kunststoff gefertigtes Gehäuse auf. Die Vielzahl von Energiespeicherzellen sind in dem Gehäuse aufnehmbar bzw. aufgenommen. Zwischen dem Gehäuse und der Vielzahl von Energiespeicherzellen ist zumindest bereichsweise, vorzugsweise vollständig, eine Barriereschicht angeordnet.

Unter der Barriereschicht ist eine Schicht zu verstehen, die verhindert, dass Gase und/oder Flüssigkeiten in das Gehäuse eintreten bzw. aus dem Gehäuse austreten können. Die Barriereschicht kann dabei aus Metall, Metalloxid und/oder Silikaten ausgebildet sein. Bevorzugt wird eine Barriereschicht aus einem Leichtmetall, insbesondere Aluminium und/oder einer Aluminiumlegierung verwendet.

Die Vorteile der Erfindung liegen auf der Hand. Ein solches Energiespeichermodul weist zunächst den Vorteil auf, dass diverse Funktionalitäten in das Energiespeichermodul integriert werden, und dadurch sowohl die Produktkosten als auch die Fertigungskosten gesenkt werden können. Dies wird zudem durch das erfindungsgemäße, einfache und schnelle Fertigungsverfahren unterstützt. Durch das Anwenden eines kontinuierlichen Fertigungsverfahrens kann eine hohe Anzahl an Energiespeichermodulen in kurzer Zeit hergestellt werden, was im Vergleich zu einer diskontinuierlichen Fertigung weniger aufwendig und zugleich weniger kostenintensiv ist. Des Weiteren können vorteilhafterweise kostengünstige und gut verformbare Materialien, insbesondere Kunststoffe, für das Gehäuse verwendet werden. Beispielsweise kann ein Acryl-Butadien-Styrol, Polycarbonat, Polyamid, Polyvinylchlorid, Polyethylenterephthalat, Polyoxymethylen, Polyolefin oder ein Copolymer hiervon gewählt werden, bevorzugt ein Polyolefin Copolymer wie beispielsweise ein Polypropylen-Polyethylen-Copolymer. Mithilfe der Barriereschicht ist das Gehäuse dabei vorteilhafterweise dennoch gegen Gase und/oder Flüssigkeiten undurchlässig.

Gemäß Erfindung weist das Gehäuse eine obere Gehäuseschale und eine untere Gehäuseschale auf. Dies vereinfacht ferner die Herstellung des Energiespeichermoduls, da das Gehäuse zum einen einfacher herzustellen und zum anderen einfacher anzuordnen ist. Dadurch können die Produktkosten und Fertigungskosten weiterhin gesenkt werden.

Gemäß einem weiteren Aspekt der Erfindung kann das Gehäuse die Vielzahl von Energiespeicherzellen hermetisch einschließen. Dadurch erhöht sich vorteilhafterweise die Sicherheit des Energiespeichermoduls, da eine Verpuffungs- und Brandgefahr, welche durch einen Feuchtigkeitseintritt in das Energiespeichermodul hervorgerufen werden kann, durch eine hermetische Abdichtung des Energiespeichermoduls von der Umgebung vorteilhafterweise verhindert werden kann.

Gemäß einem weiteren Aspekt der Erfindung kann das Gehäuse vorgeformt sein, insbesondere plastisch vorgeformt, und zwar derart, dass das Gehäuse eine Vielzahl von Vertiefungen aufweist, welche jeweils dazu ausgelegt sind, eine Energiespeicherzelle aufzunehmen. Insbesondere ist das Gehäuse thermogeformt. Dies führt vorteilhafterweise zu einer einfacheren Fertigung, da mit Hilfe der Vertiefungen die Energiespeicherzellen automatisch richtig angeordnet werden können. Dadurch entfällt ein weiterer Positionierungs- und Ausrichtungsschritt. Des Weiteren kann das Gehäuse über kostengünstige Fertigungsverfahren vorgeformt werden, was wiederum zu einer Reduzierung der Produkt- und Fertigungskosten führt.

Erfindungsgemäß weist jede Energiespeicnerzelle aut zwei sich gegenüberliegenden Seiten Jeweils ein Verbindungselement auf, über das nebeneinander angeordnete Energiespeicherzellen miteinander verbunden oder verbindbar sind. Insbesondere kann es sich bei dem Verbindungselement um ein flexibles und/oder biegbares Verbindungselement handeln. Bevorzugt können nebeneinander angeordnete Energiespeicherzellen über deren Verbindungselemente verschweißt werden, und zwar derart, dass eine flexible und/oder biegbare Verbindungsstelle ausgebildet wird. Dadurch wird vorteilhafterweise das elektrische Kontaktieren von nebeneinander angeordneten Energiespeicherzellen vereinfacht, insbesondere das in Reihe Schalten der Energiespeicherzellen. Dies führt zu einer einfacheren Herstellung des Energiespeichermoduls, was wiederum mit einer Reduzierung der Kosten einhergeht.

Gemäß einem weiteren Aspekt der Erfindung kann das das Gehäuse und die Vielzahl von Energiespeicherzellen einen Zellenstapel ausbilden, und zwar dadurch, dass die Verbindungselemente jeweils derart gebogen sind, dass zwei benachbarte Zellen übereinander angeordnet sind. Das heißt, dass die Vielzahl von Energiespeicherzellen, welche zuvor zumindest im Wesentlichen horizontal nebeneinanderliegend angeordnet waren, einen Zellenstapel ausbilden, bei dem die Vielzahl von Energiespeicherzellen nun zumindest im Wesentlichen vertikal übereinander gestapelt sind, wobei direkt übereinanderliegende Energiespeicherzellen weiterhin über die nun verbogenen Verbindungselemente verbunden sind.

Dies führt vorteilhafterweise dazu, dass die Energiespeicherzellen des Energiespeichermoduls platzsparend angeordnet sind, und dadurch insbesondere die Gesamtgröße des Energiespeichermoduls bzw. damit auch eines Energiespeichersystems, welches mindestens ein Energiespeichermodul aufweist, dabei möglichst klein gehalten werden kann.

Gemäß einem weiteren Aspekt der Erfindung kann das Energiespeichermodul ferner mindestens eine Folie aus Kunststoff aufweisen, welche zumindest bereichsweise zwischen dem Gehäuse und den Energiespeicherzellen vorgesehen ist, vorzugsweise jeweils zwischen der unteren und der oberen Gehäuseschale und der Vielzahl von Energiespeicherzellen vorgesehen ist. Dies birgt den Vorteil, dass die Energiespeicherzellen ferner vor Umgebungseinflüssen mit Hilfe der Folie aus Kunststoff geschützt werden können. Dabei kann die Folie aus Kunststoff aus kostengünstigem und einfach verarbeitbarem Kunststoff, wie beispielsweise Polyamid, Polyethylenterephthalat, Polypropylen, und/oder Polyethylen gefertigt sein.

Durch das Verwenden eines Kunststoffes wird darüber hinaus auch das Gewicht des Energiespeichermoduls vorteilhafterweise nicht in die Höhe getrieben. Ferner bleibt es kostengünstig und einfach herzustellen.

Gemäß einem weiteren Aspekt kann die Folie aus Kunststoff Ausnehmungen aufweisen, und zwar an Stellen, an welchen die Verbindungselemente angeordnet sind. Dadurch wird vorteilhafterweise eine einfache Möglichkeit geboten, Kontaktpunkte mit beispielsweise einer Messleitung auszubilden, sowie einen Zugang zu den Verbindungselementen für etwaige Weiterverarbeitungsschritte, wie beispielsweise ein Verbinden zweier direkt benachbarter Energiespeicherzellen über deren Verbindungselemente.

Gemäß einem weiteren Aspekt der Erfindung kann die Folie aus Kunststoff vorgeformt sein, insbesondere plastisch vorgeformt, vorzugsweise thermogeformt, und zwar derart, dass die Folie eine Vielzahl von Vertiefungen aufweist, welche jeweils dazu ausgelegt sind, eine Energiespeicherzelle aufzunehmen. Dies ermöglicht vorteilhafterweise eine einfache Anordnung und Ausrichtung sowohl der Energiespeicherzellen in der Folie, als auch der Folie in dem Gehäuse, bzw. der oberen und unteren Gehäuseschale. Damit geht auch eine einfache Herstellung einher, welche auch zu einer Reduzierung der Verfahrenskosten führen kann. Gemäß einem weiteren Aspekt der Erfindung können die Energiespeicherzellen als Jelly-Rolls ausgebildet sein. Jelly-Roll-Zellen stellen hierbei vorteilhafte platzsparende, sowie gewichtseinsparende Energiespeicherzellen dar, welche dennoch eine relativ hohe Leistungsdichte aufweisen.

Gemäß einem weiteren Aspekt der Erfindung können die Energiespeicherzellen Lithium-Ionen-Zellen sein. Vorteilhafterweise können Lithium-Ionen-Zellen eine relativ hohe Leistungsdichte aufweisen.

Gemäß einem weiteren Aspekt kann das Energiespeichermodul eine Messleitung aufweisen, welche vorzugsweise in dem Gehäuse oder in der Folie aus Kunststoff integriert ist. Über eine solche Messleitung kann das Energiespeichermodul vorteilhafterweise einfach überwacht werden, was zu einer Erhöhung der Sicherheit und Leistungsfähigkeit des Energiespeichermoduls bzw. zur Beurteilung der Leistungsfähigkeit des Energiespeichermoduls führen kann.

Gemäß einem weiteren Aspekt kann die Messleitung einen Zustand, insbesondere eine Spannung und/oder einen Stromfluss und/oder eine Kapazität, einer Energiespeicherzelle, von mehreren Energiespeicherzellen, und/oder von allen der Vielzahl von Energiespeicherzellen bestimmen. Vorteilhafterweise können hierbei die wichtigsten Parameter, über welche auf den Zustand des Energiespeichermoduls geschlossen werden kann, überwacht werden. Dadurch wird die Funktionsfähigkeit des Energiespeichermoduls ständig überwacht und sichergestellt.

Gemäß einem weiteren Aspekt der Erfindung kann jede Energiespeicherzelle mindestens ein Füllloch und/oder Entgasungsloch aufweisen. Insbesondere kann das mindestens eine Füll- und/oder Entgasungsloch wieder verschließbar bzw. wieder hermetisch verschließbar ausgebildet sein. Dadurch wird vorteilhafterweise die Handhabung einer Speicherzelle vereinfacht.

Gemäß einem weiteren Aspekt ist ein Energiespeichersystem angegeben, insbesondere zum Einsatz in einem Fahrzeug. Das Energiespeichersystem weist dabei mindestens ein oben beschriebenes Energiespeichermodul und ein Systemgehäuse auf, wobei das mindestens Energiespeichermodul innerhalb des Systemgehäuses angeordnet ist. Dabei wird vorteilhafterweise ein einfach und kostengünstig zu fertigendes Energiespeichersystem angegeben.

Im Hinblick auf das Verfahren zum Herstellen eines Energiespeichermoduls, insbesondere eines oben beschriebenen Speichermoduls handelt es sich hierbei erfindungsgemäß um ein kontinuierliches Fertigungsverfahren. Dies liefert den Vorteil, dass das Energiespeichermodul bzw. eine Vielzahl von Energiespeichermodulen schnell und kostengünstig hergestellt werden können. Dies ist zudem im Vergleich zu einer diskontinuierlichen Fertigung weniger aufwendig. Des Weiteren können vorteilhafterweise kostengünstige und gut verformbare Materialien, insbesondere Kunststoffe, für das Gehäuse verwendet werden. Beispielsweise kann ein Acryl-Butadien-Styrol, Polycarbonat, Polyamid, Polyvinylchlorid, Polyethylenterephthalat, Polyoxymethylen, Polyolefin oder ein Copolymer hiervon gewählt werden.

Erfindungsgemäß weist das Vertanren ferner folgende Schritte auf, und zwar das Bereitstellen einer unteren Gehauseschale aus Kunststoff als Endlosband, das Anordnen von einer Vielzahl von Energiespeicherzellen mit jeweils einer ersten Oberfläche der Energiespeicherzellen auf der unteren Gehäuseschale und Bereitstellen einer oberen Gehäuseschale aus Kunststoff als Endlosband, und zwar auf einer zweiten Oberfläche der Energiespeicherzellen, welche der ersten Oberfläche gegenüberliegt. Dabei ist jeweils zwischen der unteren und oberen Gehäuseschale und der Vielzahl von Energiespeicherzellen eine Barriereschicht angeordnet. Dies senkt vorteilhafterweise die Verfahrensdauer und damit die Produktionskosten. Mithilfe der Barriereschicht ist das Gehäuse dabei vorteilhafterweise dennoch gegen Gase und/oder Flüssigkeiten undurchlässig.

Gemäß einem weiteren Aspekt der Erfindung kann das Verfahren ferner die folgende Schritte aufweisen, und zwar Bereitstellen und Thermoformen von jeweils mindestens einer Folie aus Kunststoff, und zwar derart, dass eine Vielzahl von Vertiefungen ausgebildet ist, wobei jeweils eine Vertiefung dazu ausgelegt ist, eine Energiespeicherzelle aufzunehmen. Dabei ist jeweils eine Folie aus Kunststoff zwischen der unteren und oberen Gehäuseschale und der Vielzahl von Energiespeicherzellen vorgesehen. Insbesondere ist jeweils eine Folie aus Kunststoff zwischen der Barriereschicht und der Vielzahl von Energiespeicherzellen vorgesehen.

Dies birgt den Vorteil, dass die Energiespeicherzellen ferner vor Umgebungseinflüssen mit Hilfe der Folie aus Kunststoff geschützt werden können. Dabei kann die Folie aus Kunststoff aus kostengünstigem und einfach verarbeitbarem Kunststoff, wie beispielsweise Polyamid, Polyethylenterephthalat, Polypropylen, und/oder Polyethylen gefertigt sein. Durch das Verwenden eines Kunststoffes wird darüber hinaus auch das Gewicht des Energiespeichermoduls vorteilhafterweise nicht in die Höhe getrieben. Ferner bleibt es kostengünstig und einfach herzustellen.

Erfindungsgemäß sind direkt benachbarte Energiespeicherzellen über Verbindungselemente, welche jeweils an zwei sich gegenüberliegenden Seiten der Energiespeicherzellen angeordnet sind, miteinander verbunden, und zwar derart, dass die Energiespeicherzellen elektrisch in Reihe geschaltet werden. Insbesondere können direkt benachbarte Energiespeicherzellen durch Verschweißen der Verbindungselemente dieser Energiespeicherzellen verbunden werden. Dabei handelt es sich bei dem Verbindungselement um ein flexibles und/oder biegbares Verbindungselement.

Dabei werden nebeneinander angeordnete Energiespeicherzellen über deren Verbindungselemente verschweißt, und zwar derart, dass eine flexible und/oder biegbare Verbindungsstelle ausgebildet wird. Dies liefert den Vorteil, dass dadurch das elektrische Kontaktieren von nebeneinander angeordneten Energiespeicherzellen vereinfacht werden kann, insbesondere das in Reihe Schalten der Energiespeicherzellen. Dies führt zu einer einfacheren Herstellung des Energiespeichermoduls, was wiederum mit einer Reduzierung der Kosten einhergeht.

Gemäß einem weiteren Aspekt der Erfindung kann eine vorbestimmte oder vorbestimmbare Anzahl an verbundenen Zellen abgetrennt werden, wobei zumindest das Gehäuse und die Vielzahl von Energiespeicherzellen einen Zellenstapel ausbilden, und zwar derart, dass jeweils zwei direkt benachbarte Energiespeicherzellen über die dazugehörigen Verbindungselemente derart gebogen werden, dass sie übereinander angeordnet sind, insbesondere derart, dass eine schlangenlinienförmige Biegelinie ausgebildet wird. Dies liefert den Vorteil, dass die Energiespeicherzellen des Energiespeichermoduls platzsparend angeordnet werden können, und dadurch insbesondere die Gesamtgröße des Energiespeichermoduls bzw. damit auch eines Energiespeichersystems, welches mindestens ein Energiespeichermodul aufweist, dabei möglichst klein gehalten werden kann.

Die Erfindung wird nachstehend, auch hinsichtlich weiterer Merkmale und Vorteile, anhand der Beschreibung von Ausführungsformen unter Bezugnahme auf die beiliegenden Zeichnungen näher erläutert.

Diese zeigen in:
- FIG. 1: eine schematische Darstellung eines Fahrzeugs;
- FIG. 2: eine schematische Darstellung eines Energiespeichermoduls gemäß der vorliegenden Erfindung;
- FIG. 3: eine schematische Darstellung eines Zellenstapels gemäß der vorliegenden Erfindung;
- FIG. 4: eine schematische Darstellung eines Zellenstapels, welcher in einem Modulgehäuse angeordnet ist; und
- FIG. 5: eine schematische Darstellung des Fertigungsverfahrens eines Energiespeichermoduls.

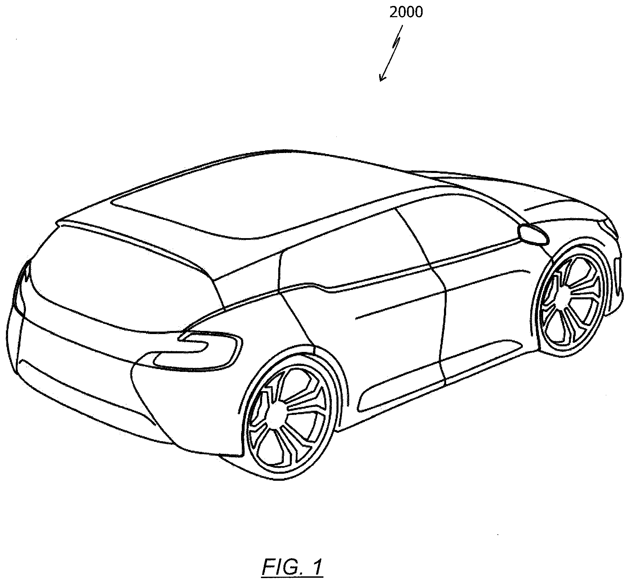

Nachfolgend wird ein Energiespeichermodul sowie das erfindungsgemäße Verfahren zum Herstellen eines solchen Energiespeichermoduls unter Bezugnahme auf die Darstellungen in den FIGS. 1 bis 5 genauer beschrieben. Gleiche oder gleichwirkende Elemente und Funktionen sind mit demselben oder ähnlichen Bezugszeichen versehen.

Mit der fortwährend steigenden Anzahl an elektrischen Energieverbrauchern, sowie der Weiterentwicklung der Fahrzeuge 2000 in Richtung von Elektrofahrzeugen und/oder Hybrid-Fahrzeugen, werden vermehrt Energiespeichersysteme mit einer relativ hohen Leistungsdichte gefordert, welche darüber hinaus schnell und kostengünstig zu fertigen sind. Des Weiteren ist es aber genauso denkbar, das erfindungsgemäße Energiespeichermodul 100 in Bereichen einzusetzen, in denen eine relativ hohe Leistungsdichte des Energiespeichermoduls 100 bzw. des Energiespeichersystems 1000 bei geringem Einbauplatz und zu niedrigen Preisen fordert wird.

Im Folgenden bedeutet "nebeneinander" zumindest im Wesentlichen in horizontaler Richtung, und "übereinander" zumindest im Wesentlichen vertikaler Richtung. FIG. 1 zeigt eine schematische Darstellung eines Fahrzeugs 2000, welches mindestens ein Energiespeichersystem 1000 aufweist. Das Energiespeichersystem 1000 weist ferner mindestens ein Energiespeichermodul 100 mit einer Vielzahl von Energiespeicherzellen 10 auf. Das Energiespeichersystem 1000 kann hierbei in einem in Fahrtrichtung vorderen Bereich des Fahrzeugs 2000, in einem hinteren Bereich des Fahrzeugs 2000 und/oder in einem Bereich unterhalb der Sitze, insbesondere unterhalb des Fahrersitzes angeordnet sein.

Das Fahrzeug 2000 kann ein Luft- oder Wasserfahrzeug, ein spurgeführtes Fahrzeug, ein Geländefahrzeug, oder bevorzugt ein Straßenfahrzeug sein, wobei unter Straßenfahrzeug ein Personenkraftwagen, ein Lastkraftwagen, ein Bus oder ein Wohnmobil verstanden werden kann.

Das Fahrzeug 2000 wird durch eine Antriebseinheit angetrieben. Die Antriebseinheit kann einen Verbrennungsmotor, einen Elektromotor oder eine Kombination davon umfassen. Ein Fahrzeug 2000, welches ausschließlich mit einem Elektromotor angetrieben wird, wird als Elektro-Fahrzeug bezeichnet. Ein Fahrzeug 2000, welches sowohl einen Elektromotor, als auch einen Verbrennungsmotor aufweist, wird als Hybrid-Fahrzeug bezeichnet. Hybrid-Fahrzeuge können ferner in Mikrohybrid-Fahrzeuge, Mildhybrid-Fahrzeug, Vollhybrid-Fahrzeuge und/oder Plug-In-Hybrid-Fahrzeuge untergliedert werden. Hierbei kann unter Plug-In-Hybrid-Fahrzeugen jedwedes Hybridfahrzeug verstanden werden, welches nicht nur über den Verbrennungsmotor aufgeladen wird, sondern ebenfalls über das Stromnetz geladen werden kann. Unter Vollhybrid-Fahrzeugen werden Fahrzeuge verstanden, die allein über den Elektromotor angetrieben werden können. Mikrohybrid-Fahrzeuge verfügen über eine Start-Stopp-Funktionalität, und vorzugsweise ebenso über eine Stopp-In-Motion-Funktionalität. Des Weiteren können Mikrohybrid-Fahrzeuge das Energiespeichersystem 1000 über eine sogenannte Bremsenergierückgewinnung aufgeladen werden. Mildhybrid-Fahrzeuge können darüber hinaus über eine Boost-Funktion verfügen, welche zur Unterstützung des Verbrennungsmotors zur Leistungssteigerung verwendet wird.

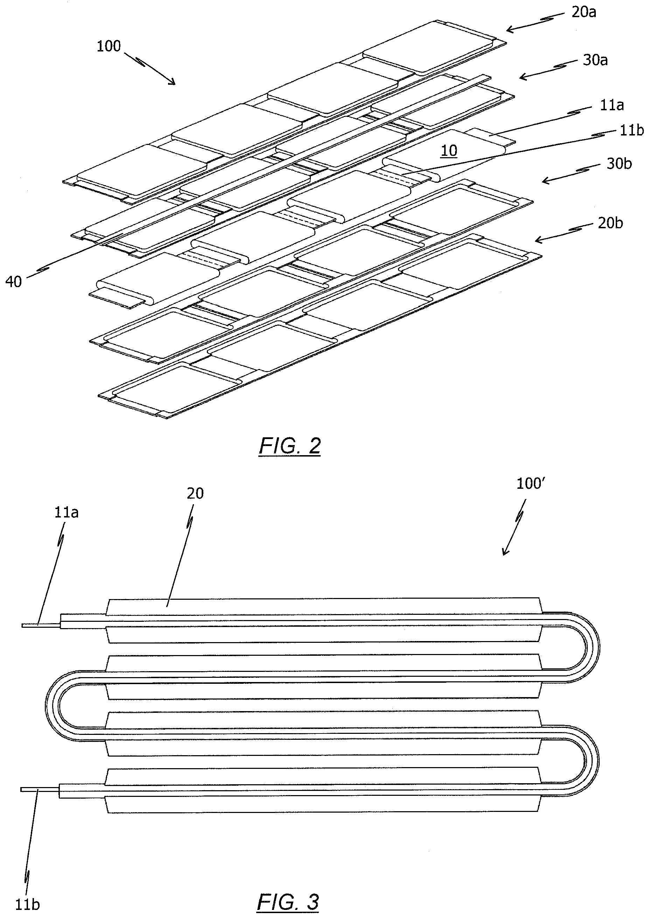

FIG. 2 zeigt eine schematische Explosionsdarstellung eines Energiespeichermoduls 100. Demnach weist das Energiespeichermodul 100 eine Vielzahl von Energiespeicherzellen 10 auf, welche elektrisch in Reihe geschaltet sind. Des Weiteren weist das Energiespeichermodul 100 ein Gehäuse 20 auf, das zumindest bereichsweise, vorzugsweise vollständig aus Kunststoff gefertigt ist. Zwischen dem Gehäuse 20 und der Vielzahl von Energiespeicherzellen 10 ist zudem ein zumindest bereichsweise, insbesondere vollständig, eine Barriereschicht vorgesehen.

Unter der Barriereschicht wird im Zuge dieser Anmeldung eine Schicht verstanden, welche verhindert, dass Gase und/oder Flüssigkeiten aus der Umgebung in das Gehäuse 20 des Energiespeichermoduls 100 eintreten können bzw. dass Gase und/oder Flüssigkeiten aus dem Gehäuse 20 in die Umgebung austreten können. Insbesondere ist unter der "Barriereschicht" eine Schicht gemeint, die gegenüber Gasen in der Umgebungsluft, gegenüber Gasen, welche während des Betriebs des Energiespeichermoduls 100 entstehen und gegenüber Feuchtigkeit in der Umgebung undurchlässig ist.

Die Barriereschicht ist hierbei aus Metall, Metalloxid und/oder aufgebaut.

Das Metall kann ein Leichtmetall sein bzw. aufweisen, insbesondere Aluminium und/oder eine Aluminiumlegierung oder Magnesium und/oder eine Magnesiumlegierung. Insbesondere ist jegliche Schicht, die den Durchtritt von Gas und Flüssigkeit durch den Kunststoff verhindert und dabei nicht die elektrochemischen Eigenschaften der Zelle verändert, als Barriereschicht geeignet.

Die Barriereschicht kann zumindest bereichsweise mit Innenflächen des Gehäuses, insbesondere mit Innenflächen der unteren Gehäuseschale 20b und der oberen Gehäuseschale 20a, stoffschlüssig verbunden sein, insbesondere kann die Barriereschicht auf die Innenflächen des Gehäuses 20 gedampft sein. Dies geschieht bevorzugt über chemische Gasphasenabscheidung oder physikalische Gasphasenabscheidung.

Ebenso kann die Barriereschicht zumindest bereichsweise, insbesondere vollständig, als Folie ausgebildet sein, welche mit den Innenflächen des Gehäuses, insbesondere der unteren Gehäuseschale 20b und der oberen Gehäuseschale 20a, verbunden ist. Bevorzugt handelt es sich hierbei um eine Metallfolie, welche stoffschlüssig mit den Innenflächen des Gehäuses 20 verbunden ist.

FIG. 2 deutet ferner an, dass jede Energiespeicherzelle 10 auf zwei sich gegenüberliegenden Seiten jeweils ein Verbindungselement 11a, 11b aufweist. Dabei kann ein erstes Verbindungselement 11a einem positiven Kontakt der Energiespeicherzelle 10 entsprechen und ein zweites Verbindungselement 11b einem negativem Kontakt der Energiespeicherzelle 10.

Ferner können die Verbindungselemente 11a, 11b aus einer Metallfolie gebildet sein, insbesondere einer Kupferfolie oder einer Aluminiumfolie.

Des Weiteren können zwei direkt benachbarte Energiespeicherzellen 10 über jeweils ein Verbindungselement 11a, 11b dieser Energiespeicherzellen 10 miteinander verbunden werden. Bevorzugt erfolgt die Verbindung zweier direkt benachbarter Energiespeicherzellen 10 durch ein Verschweißen von jeweils einem Verbindungselement 11a, 11b der zu verbindenden Energiespeicherzellen 10. Dabei bilden die Verbindungselemente 11a, 11b der zwei direkt benachbarten Energiespeicherzellen 10 einen Überlappungsbereich aus, in welchem das Verschweißen erfolgt. Dabei ist zu beachten, dass das Verbinden zweier direkt benachbarter Energiespeicherzellen 10 über jeweils ein Verbindungselement 11a, 11b der Energiespeicherzellen 10 derart ausgeführt wird, dass eine flexible und/oder biegbare Verbindungsstelle ausgebildet wird.

Vorteilhafterweise entfällt durch das Verbinden der Vielzahl von Energiespeicherzellen 10 über deren Verbindungselemente 11a, 11b die Notwendigkeit, eine Sammelschiene vorzusehen.

Ferner kann mindestens eine Folie 30 aus Kunststoff vorgesehen sein. Die Folie 30 aus Kunststoff ist dabei zwischen der Vielzahl von Energiespeicherzellen 10 und dem Gehäuse 20, bzw. der unteren Gehäuseschale 20b und der oberen Gehäuseschale 20a, angeordnet. Die Folie 30 aus Kunststoff kann ferner vorgeformt sein, insbesondere plastisch vorgeformt und bevorzugt thermogeformt sein, und zwar derart, dass die Folie 30 aus Kunststoff eine Vielzahl von Vertiefungen aufweist, welche dazu ausgelegt sind, jeweils eine Energiespeicherzelle 10 aufzunehmen. Bevorzugt wird eine untere Folie 30b aus Kunststoff, welche zwischen der unteren Gehäuseschale 20b und der Vielzahl von Energiespeicherzellen 10 angeordnet ist, und eine obere Folie 30a aus Kunststoff, welche zwischen der oberen Gehäuseschale 20a und der Vielzahl von Energiespeichersystemen 1000 angeordnet ist, vorgesehen. Die mindestens eine Folie 30 kann dabei beispielsweise aus Acryl-Butadien-Styrol, Polycarbonat, Polyamid, Polyvinylchlorid, Polyethylenterephthalat, Polyoxymethylen, Polyolefin, wie z. B. Polypropylen und/oder Polyethylen, oder einem Copolymer hiervon gefertigt sein.

Des Weiteren kann die mindestens eine Folie 30 aus Kunststoff in Bereichen, an denen die Verbindungselemente 11a, 11b der Energiespeicherzellen 10 angeordnet sind, Ausnehmungen aufweisen. Diese Ausnehmungen dienen zum einen dazu, dass weitere Fertigungsschritte, beispielsweise das Verbinden zweier direkt benachbarter Energiespeicherzellen 10 über deren Verbindungselemente 11a, 11b, einfacher durchgeführt werden können, und zum anderen, dass die Überwachung der einzelnen Zellen durch Kontaktierung der Verbindungselemente 11a, 11b mit einer Messleitung 40 vereinfacht werden kann.

Ferner kann eine Messleitung 40 in einem Energiespeichermodul 100 vorgesehen sein. Diese Messleitung 40 kann beispielsweise in der Folie 30 aus Kunststoff, insbesondere in der oberen Folie 30a aus Kunststoff, oder in dem Gehäuse 20, insbesondere in der oberen Gehäuseschale 20a, integriert sein. Die Messleitung 40 kann dabei einen Zustand einer Energiespeicherzelle 10, von mehreren Energiespeicherzellen 10 und/oder von allen der Vielzahl von Energiespeicherzellen 10 bestimmen. Insbesondere kann die Messleitung 40 eine Spannung und/oder einen Stromfluss und/oder eine Kapazität davon ermitteln.

Das Energiespeichermodul 100, welches schematisch in FIG. 2 gezeigt ist, weist vier Energiespeicherzellen 10 auf. Es ist allerdings zu beachten, dass die Anzahl an Energiespeicherzellen 10 eines Energiespeichermoduls 100 von der gewünschten Leistungsdichte des Energiespeichermoduls 100 abhängt. So kann auch ein Energiespeichermodul 100 mit mehr oder weniger Energiespeicherzellen 10 denkbar sein.

FIG. 3 zeigt eine schematische Darstellung eines Energiespeichermoduls 100, welches als Zellenstapel 100' ausgebildet ist. Hierfür ist das Energiespeichermodul 100, welches zunächst im Wesentlichen horizontal ausgerichtet ist, d. h., dass die einzelnen Energiespeicherzellen 10 im Wesentlichen horizontal nebeneinander liegen, über die Verbindungselemente 11a, 11b der der Energiespeicherzellen 10 derart gebogen, dass die Energiespeicherzellen 10 des Zellenstapels 100' im Wesentlichen vertikal übereinander angeordnet sind. Dabei bilden die Verbindungselemente 11a, 11b zweier verbundener Energiespeicherzellen 10 vorzugsweise eine zumindest im Wesentlichen 180° Biegung aus. Diese Biegung wird ebenfalls von dem Gehäuse 20 und gegebenenfalls von der mindestens einen Folie 30 aus Kunststoff ausgebildet, und zwar an Stellen, in denen die Verbindungselemente 11a, 11b der Energiespeicherzellen 10 aufgenommen werden.

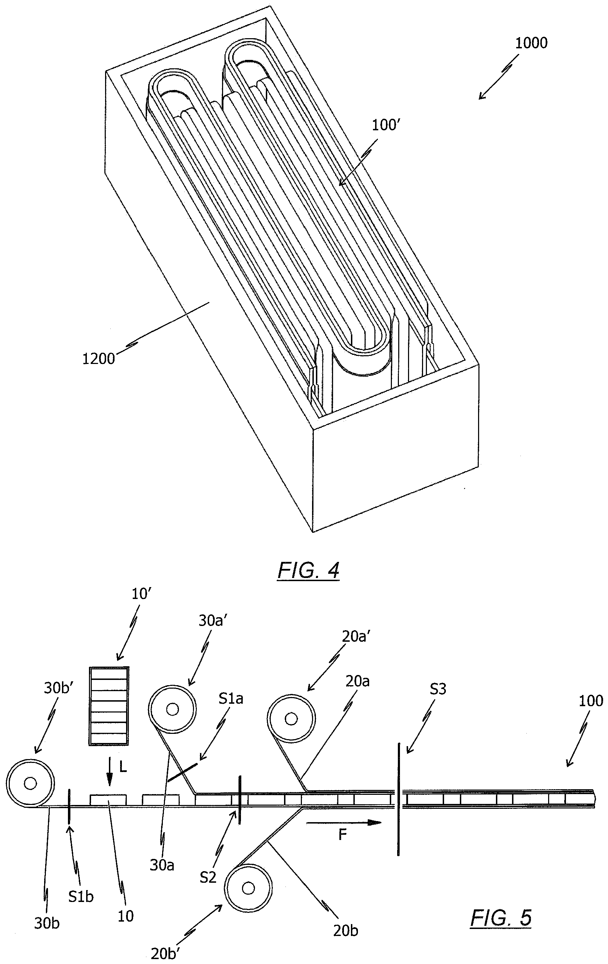

FIG. 4 zeigt eine schematische Darstellung eines Energiespeichersystems 1000, welches ein Systemgehäuse 1200 und ein als Zellenstapel 100' ausgebildetes Energiespeichermodul 100 aufweist. Hierbei wurde auf die Darstellung eines Deckels zur besseren Veranschaulichung verzichtet. Der nicht dargestellte Deckel weist ein positives und ein negatives Anschlusselement auf, welche jeweils über ein Kontaktierungselement mit einem Verbindungselement 11a, 11b des Zellenstapels 100' verbunden werden können. Des Weiteren ist es denkbar, dass eine Vielzahl von als Zellenstapel 100' ausgebildeten Energiespeichermodulen 100 in dem Systemgehäuse 1200 angeordnet sind. Die Anzahl an Energiespeichermodulen 100 ist hierbei abhängig von der gewünschten Gesamtkapazität des Energiespeichersystems 1000.

Auch wenn dies in den Figuren nicht explizit hervorgehoben ist, kann jede Energiespeicherzelle 10 mindestens ein Füll- und/oder Entgasungsloch aufweisen. Das Füll- und/oder Entgasungsloch ist vorteilhafterweise derart ausgebildet, dass es über einen Stopfen wiederverschließbar ist, bevorzugt hermetisch verschließbar ist. Auch ist es denkbar, das Füll- und/oder Entgasungsloch über eine Membran, welche bevorzugt als Berstmembran ausgebildet ist, wieder zu verschließen. Eine solche Membran zeichnet sich insbesondere dadurch aus, dass sie gegen Gase und/oder Flüssigkeiten undurchlässig ist, und einen Schutz insofern darstellt, dass sie platzt wenn ein Innendruck der Energiespeicherzelle einen vorher bestimmten oder bestimmbaren Wert übersteigt.

In FIG. 5 ist eine schematische Darstellung des Verfahrens zum Herstellen eines Energiespeichermoduls 100 gezeigt, bei welchem es sich um ein kontinuierliches Verfahren handelt. Dabei ist ein Magazin 10' dargestellt, welches eine Vielzahl von Energiespeicherzellen 10 enthält. Ferner ist eine Rolle 20' dargestellt, auf welcher ein Vorrat des Gehäuses 20 aufgewickelt ist, insbesondere eine Rolle 20b', auf der eine untere Gehäuseschale 20b als Endlosband aufgewickelt ist, und eine Rolle 20a', auf der eine obere Gehäuseschale 20a als Endlosband aufgewickelt ist. Bevorzugt ist das Gehäuse 20, bzw. die untere Gehäuseschale 20b und die obere Gehäuseschale 20a bereits vorgeformt, und zwar derart, dass das Gehäuse 20, bzw. die untere Gehäuseschale 20b bzw. die obere Gehäuseschale 20a, eine Vielzahl von Vertiefungen aufweist, welche dazu ausgelegt sind, je eine Energiespeicherzelle 10 aufzunehmen. Besonders bevorzugt ist auf Gehäuse 20, bzw. der unteren Gehäuseschale 20b oder der oberen Gehäuseschale 20a, eine Barriereschicht angeordnet, und zwar auf einer Oberfläche des Gehäuses, bzw. der unteren Gehäuseschale 20b bzw. der oberen Gehäuseschale 20a, und zwar in Richtung der Vielzahl von Energiespeicherzellen 10. Die Fertigungsrichtung ist hierbei mit dem Pfeil F angedeutet.

Die Barriereschicht verhindert dabei, dass Gase und/oder Flüssigkeiten über das Gehäuse 20 in das Energiespeichermodul 100 eindringen können bzw. dass Gase und/oder Flüssigkeiten über das Gehäuse 20 austreten können.

Die Barriereschicht ist hierbei aus Metall, Metalloxid und/oder Silikaten aufgebaut. Das Metall kann ein Leichtmetall sein bzw. aufweisen, insbesondere Aluminium und/oder eine Aluminiumlegierung oder Magnesium und/oder eine Magnesiumlegierung.

Die Barriereschicht kann zumindest bereichsweise mit Innenflächen des Gehäuses, insbesondere mit Innenflächen der unteren Gehäuseschale 20b und der oberen Gehäuseschale 20a, stoffschlüssig verbunden sein, insbesondere kann die Barriereschicht auf die Innenflächen des Gehäuses 20 gedampft sein. Dies geschieht bevorzugt über chemische Gasphasenabscheidung oder physikalische Gasphasenabscheidung.

Ebenso kann die Barriereschicht zumindest bereichsweise, insbesondere vollständig, als Folie ausgebildet sein, welche mit den Innenflächen des Gehäuses, insbesondere der unteren Gehäuseschale 20b und der oberen Gehäuseschale 20a, verbunden ist. Bevorzugt handelt es sich hierbei um eine Metallfolie, welche stoffschlüssig mit den Innenflächen des Gehäuses 20 verbunden ist.

Ferner ist mindestens eine Rolle 30', mit einem Folienvorrat aus Kunststoff als Endlosband vorgesehen. Zunachst wird von der Rolle 30b' mit der unteren Folie 30b aus Kunststoff die untere Folie 30b aus Kunststoff abgerollt und in einem ersten Schritt (S1b) vorgeformt. Das Vorformen der unteren Folie 30b aus Kunststoff ist insbesondere eine plastische Vorformung, bevorzugt erfolgt das Vorformen über einen Thermoform-Schritt. Dabei wird die untere Folie 30b aus Kunststoff derart vorgeformt, dass eine Vielzahl von Vertiefungen eingebracht werden.

Anschließend wird je eine Energiespeicherzelle 10 aus dem Magazin 10' von Energiespeicherzellen 10 in einer Zuführrichtung L derart bereitgestellt, dass jeweils eine Energiespeicherzelle 10 in einer Vertiefung der unteren Folie 30b aus Kunststoff angeordnet wird. Die Zuführrichtung der Energiespeicherzellen 10 ist hierbei mit dem Pfeil L angedeutet.

Anschließend wird eine obere Folie 30a aus Kunststoff von einer Rolle 30a' mit einem Folienvorrat bereitgestellt und entsprechend der unteren Folie 30b aus Kunststoff vorgeformt (S1a).

Die vorgeformte Folie 30a kann nun derart auf der Vielzahl von Energiespeicherzellen 10 angeordnet werden, dass je eine Energiespeicherzelle 10 in einer Vertiefung der oberen Folie 30a aus Kunststoff angeordnet wird. Anschließend werden durch Ausnehmungen in der oberen und unteren Folie 30a, 30b aus Kunststoff hinweg Verbindungselemente 11a, 11b zweier direkt benachbarter Energiespeicherzellen 10 miteinander verbunden (S2). Dies erfolgt bevorzugt über einen Schweißvorgang. Dabei ist zu beachten, dass eine flexible und/oder biegbare Verbindungsstelle ausgebildet wird.

Anschließend wird die untere Gehäuseschale 20b als Endlosband von der Rolle 20b' mit dem unteren Gehäuseschalenvorrat bereitgestellt, und gleichzeitig auch die obere Gehäuseschale 20a als Endlosband von der Rolle 20a' mit dem oberen Gehäuseschalenvorrat bereitgestellt, und zwar derart, dass die untere Gehäuseschale 20b und die obere Gehäuseschale 20a die untere Folie 30b aus Kunststoff und die obere Folie 30a aus Kunststoff sowie die Vielzahl von Energiespeicherzellen 10 umschließen. Dabei ist besonders bevorzugt bereits eine Barriereschicht auf der unteren bzw. oberen Gehäuseschale 20a, 20b vorgesehen, welche auch bereits vorgeformt ist. Die obere und die untere Gehäuseschale 20a, 20b werden derart zugeführt, dass Vertiefungen in der unteren bzw. der oberen Gehäuseschale 20a, 20b die Vertiefungen in der unteren bzw. oberen Folie 30a, 30b aus Kunststoff und die Energiespeicherzellen 10 aufnehmen.

In einem weiteren Schritt wird die Endlosanordnung von Energiespeicherzellen 10 mit Gehäuse 20 und die mindestens eine Folie 30 aus Kunststoff über einen Schneidevorgang in einzelne Energiespeichermodule 100 mit einer vorbestimmten oder vorbestimmbaren Anzahl an Energiespeicherzellen 10 abgetrennt.

In einem weiteren Schritt kann ein Energiespeichermodul 100 gebogen werden.

Dies geschieht derart, dass ein vorher im Wesentlichen horizontal angeordnetes Energiespeichermodul 100 derart gebogen wird, dass ein Zellenstapel 100' ausgebildet wird, bei welchem die Energiespeicherzellen 10 im Wesentlichen vertikal übereinander gestapelt sind.

Genauso gut ist es aber auch denkbar, dass die Vielzahl von Energiespeicherzellen 10 nicht auf einer Folie 30 aus Kunststoff angeordnet werden, sondern direkt in dem Gehäuse. Dazu sind die einzelnen Energiespeicherzellen 10 mit je einem Zellengehäuse ausgebildet. Die Energiespeicherzellen 10 aus dem Magazin werden dabei zunächst auf ein Förderband platziert, und auf diesem miteinander über die Verbindungselemente 11a, 11b zweier benachbarter Energiespeicherzellen 10 miteinander verbunden. Die verbundenen Energiespeicherzellen 10 werden anschließend in dem Gehäuse 20, respektive der unteren Gehäuseschale 20b und der oberen Gehäuseschale 20a angeordnet und anschließend in Energiespeichermodule 100 aufgeteilt über einen Schneidevorgang.

Auch wenn dies nicht in den Figuren explizit dargestellt ist, kann beispielsweise eine Messleitung 40 in die obere oder in die untere Folie 30a, 30b aus Kunststoff integriert sein. Ebenso kann eine solche Messleitung 40 in die obere oder in die untere Gehäuseschale 20a, 20b integriert sein.

### Bezugszeichenliste

- 10: Energiespeicherzelle
- 10': Energiespeicherzellen-Magazin
- 11a, 11b: Verbindungselement
- 20: Gehäuse
- 20a, 20b: untere/obere Gehäuseschale
- 20a', 20b': Rolle mit Gehäusevorrat für untere/obere Gehäuseschale
- 30: mindestens eine Folie aus Kunststoff
- 30a, 30b: untere/obere Folie aus Kunststoff
- 30a', 30b': unterer/oberer Folienvorrat
- 40: Messleitung
- 100: Energiespeichermodul
- 100': Zellenstapel
- 1000: Energiespeichersystem
- 1200: Systemgehäuse
- 2000: Fahrzeug
- L: Zuführrichtung der Energiespeicherzellen
- F: Fertigungsrichtung
- S1: Thermoform-Schritt
- S2: Füge-Schritt
- S3: Trenn-Schritt

## Patentansprüche

1. Verfahren zum Herstellen eines Energiespeichermoduls (100) mit:
- einer Vielzahl von elektrisch in Reihe geschalteten Energiespeicherzellen (10); und
- einem zumindest bereichsweise und vorzugsweise vollständig aus Kunststoff gefertigten Gehäuse (20), in welchem die Vielzahl von Energiespeicherzellen (10) aufgenommen ist,
wobei jede Energiespeicherzelle (10) auf zwei sich gegenüberliegenden Seiten jeweils ein flexibles und/oder biegbares Verbindungselement (11a, 11b) aufweist, über das nebeneinander angeordnete Energiespeicherzellen (10) derart miteinander verbunden oder verbindbar sind, dass flexible und/oder biegbare Verbindungsstellen ausgebildet sind,
**dadurch gekennzeichnet, dass**
das Verfahren ein kontinuierliches Fertigungsverfahren ist, welches folgende Schritte aufweist:
i) Bereitstellen einer unteren Gehäuseschale (20b) aus Kunststoff als Endlosband;
ii) Anordnen der Vielzahl von Energiespeicherzellen (10) mit jeweils einer ersten Oberfläche der Energiespeicherzellen (10) auf der unteren Gehäuseschale (20b);
iii) Verschweißen der Verbindungselemente (11a, 11b), welche jeweils an zwei sich gegenüberliegenden Seiten jeder Energiespeicherzelle (10) angeordnet sind, von direkt benachbarten Energiespeicherzellen (10), um die direkt benachbarten Energiespeicherzellen (10) über die Verbindungselemente (11a, 11b) miteinander elektrisch in Reihe zu verbinden; und
iv) Bereitstellen einer oberen Gehäuseschale (20a) aus Kunststoff als Endlosband auf einer zweiten Oberfläche der Energiespeicherzellen (10), welche der ersten Oberfläche gegenüberliegt,
wobei jeweils zwischen der unteren und oberen Gehäuseschale (20a, 20b) und der Vielzahl von Energiespeicherzellen (10) eine Barriereschicht angeordnet ist, wobei die Barriereschicht ein Eindringen beziehungsweise Austreten von Gasen und/oder Flüssigkeiten in das beziehungsweise aus dem Gehäuse (20) verhindert, und wobei die Barriereschicht aus Metall, Metalloxid und/oder Silikaten stoffschlüssig mit einer der Vielzahl von Energiespeicherzellen (10) zugewandten Oberfläche der unteren Gehäuseschale (20b) und einer der Vielzahl von Energiespeicherzellen (10) zugewandten Oberfläche der oberen Gehäuseschale (20a) verbunden wird.

2. Verfahren nach Anspruch 1,
wobei das Verfahren ferner die folgenden Schritte aufweist:
- Bereitstellen und Thermoformen von jeweils mindestens einer Folie (30) aus Kunststoff, und zwar derart, dass eine Vielzahl von Vertiefungen ausgebildet wird, wobei jeweils eine Vertiefung dazu ausgelegt ist, eine Energiespeicherzelle (10) aufzunehmen,
wobei jeweils eine Folie (30) aus Kunststoff zwischen der unteren und oberen Gehäuseschale (20a, 20b) und der Vielzahl von Energiespeicherzellen (10) vorgesehen wird.

3. Verfahren nach Anspruch 1 oder 2,
wobei eine vorbestimmte oder vorbestimmbare Anzahl an verbundenen Zellen abgetrennt wird, und wobei zumindest das Gehäuse (20) und die Vielzahl von Energiespeicherzellen (10) einen Zellenstapel (100') ausbilden, und zwar derart, dass jeweils zwei direkt benachbarte Energiespeicherzellen (10) über die dazugehörigen Verbindungselemente (11a, 11b) derart gebogen werden, dass sie übereinander angeordnet sind, insbesondere derart, dass eine schlangenlinienförmige Biegelinie ausgebildet wird.

4. Verfahren nach einem der Ansprüche 1 bis 3,
wobei das Gehäuse (20) die Vielzahl von Energiespeicherzellen (10) hermetisch einschließt.

5. Verfahren nach einem der Ansprüche 1 bis 4,
wobei die untere Gehäuseschale (20b) vor dem Bereitstellen vorgeformt wird, insbesondere plastisch vorgeformt wird, vorzugsweise thermogeformt ist, und zwar derart, dass die untere Gehäuseschale (20b) eine Vielzahl von Vertiefungen aufweist, welche jeweils eine Energiespeicherzelle (10) aufnehmen.

6. Verfahren nach einem der Ansprüche 1 bis 5,
wobei zumindest das Gehäuse (20) und die Vielzahl von Energiespeicherzellen (10) einen Zellenstapel (100') ausbilden, und zwar dadurch, dass die Verbindungselemente (11a, 11b) jeweils derart gebogen werden, dass zwei benachbarte Zellen übereinander angeordnet sind.

7. Verfahren nach einem der Ansprüche 1 bis 6,
wobei die Energiespeicherzellen (10) als Jelly-Rolls ausgebildet sind,
und/oder
wobei die Energiespeicherzellen (10) Lithium-Ionen-Zellen sind.

8. Verfahren nach einem der Ansprüche 1 bis 7,
wobei jede Energiespeicherzelle (10) mindestens ein Füllloch und/oder Entgasungsloch aufweist.

## Claims

1. Method for producing an energy storage module (100) having:
- a multiplicity of energy storage cells (10), connected electrically in series; and
- a housing (20), produced from plastic, at least in some regions and preferably completely, in which the multiplicity of energy storage cells (10) is received,
wherein each energy storage cell (10) has, on each of two opposing sides, a flexible and/or bendable connecting element (11a, 11b), by means of which adjacently arranged energy storage cells (10) are connected or can be connected to one another in such a way that flexible and/or bendable connection points are formed,
**characterized in that**
the method is a continuous production method which has the following steps:
i) supplying a lower housing shell (20b) made from plastic as an endless strip;
ii) arranging the multiplicity of energy storage cells (10) in each case by means of a first surface of the energy storage cells (10) on the lower housing shell (20b);
iii) welding the connecting elements (11a, 11b), which are each arranged on two opposing sides of each energy storage cell (10), of directly adjacent energy storage cells (10) in order to electrically connect the directly adjacent energy storage cells (10) to one another in series via the connecting elements (11a, 11b); and
iv) supplying an upper housing shell (20a) made from plastic as an endless strip on a second surface of the energy storage cells (10), which lies opposite the first surface,
wherein a barrier layer is arranged between the lower and upper housing shells (20a, 20b) and each of the multiplicity of energy storage cells (10), wherein the barrier layer prevents gases and/or liquids from penetrating and/or escaping from the housing (20), and wherein the barrier layer made from metal, metal oxide and/or silicates is connected in integrally bonded fashion to a surface of the lower housing shell (20b) that faces the multiplicity of energy storage cells (10) and to a surface of the upper housing shell (20a) that faces the multiplicity of energy storage cells (10).

2. Method according to Claim 1,
wherein the method furthermore has the following steps:
- supplying and thermoforming in each case at least one plastic film (30), more specifically in such a way that a multiplicity of recesses is formed, wherein each recess is designed to receive one energy storage cell (10),
wherein a plastic film (30) is provided between the lower and upper housing shells (20a, 20b) and each of the multiplicity of energy storage cells (10).

3. Method according to Claim 1 or 2,
wherein a predetermined or predeterminable number of connected cells is cut off, and wherein at least the housing (20) and the multiplicity of energy storage cells (10) form a cell stack (100'), more specifically in such a way that in each case two directly adjacent energy storage cells (10) are bent in such a way by means of the associated connecting elements (11a, 11b) that they are arranged one above the other, in particular in such a way that a serpentine bending line is formed.

4. Method according to any one of Claims 1 to 3,
wherein the housing (20) hermetically encloses the multiplicity of energy storage cells (10).

5. Method according to any one of Claims 1 to 4,
wherein, before being supplied, the lower housing shell (20b) is pre-shaped, in particular is pre-shaped plastically, preferably is thermoformed, more specifically in such a way that the lower housing shell (20b) has a multiplicity of recesses, which each receive one energy storage cell (10).

6. Method according to one of Claims 1 to 5,
wherein at least the housing (20) and the multiplicity of energy storage cells (10) form a cell stack (100'), more specifically by virtue of the fact that the connecting elements (11a, 11b) are each bent in such a way that two adjacent cells are arranged one above the other.

7. Method according to any one of Claims 1 to 6,
wherein the energy storage cells (10) are designed as jelly rolls, and/or wherein the energy storage cells (10) are lithium-ion cells.

8. Method according to any one of Claims 1 to 7,
wherein each energy storage cell (10) has at least one filling hole and/or venting hole.

## Revendications

1. Procédé de fabrication d'un module de stockage d'énergie (100) avec :
- une pluralité de cellules de stockage d'énergie (10) connectées électriquement en série ; et
- un boîtier (20) fabriqué au moins par zones et de préférence entièrement en matière plastique, dans lequel est reçue la pluralité de cellules de stockage d'énergie (10),
chaque cellule de stockage d'énergie (10) présentant sur deux côtés opposés respectivement un élément de liaison (11a, 11b) flexible et/ou pliable, par l'intermédiaire duquel des cellules de stockage d'énergie (10) agencées les unes à côté des autres sont reliées ou peuvent être reliées entre elles de telle sorte que des points de liaison flexibles et/ou pliables sont formés,
**caractérisé en ce que**
le procédé est un procédé de fabrication continu qui présente les étapes suivantes :
i) la fourniture d'une coque de boîtier inférieure (20b) en matière plastique sous forme de bande sans fin ;
ii) l'agencement de la pluralité de cellules de stockage d'énergie (10) avec respectivement une première surface des cellules de stockage d'énergie (10) sur la coque de boîtier inférieure (20b) ;
iii) le soudage des éléments de liaison (11a, 11b), qui sont agencés respectivement sur deux côtés opposés de chaque cellule de stockage d'énergie (10), de cellules de stockage d'énergie (10) directement voisines afin de relier électriquement en série les cellules de stockage d'énergie directement voisines (10) par l'intermédiaire des éléments de liaison (11a, lib ) ; et
iv) la fourniture d'une coque de boîtier supérieure (20a) en matière plastique sous forme de bande continue sur une deuxième surface des cellules de stockage d'énergie (10) qui est opposée à la première surface,
une couche de barrière étant agencée respectivement entre les coques de boîtier inférieure et supérieure (20a, 20b) et la pluralité de cellules de stockage d'énergie (10), la couche de barrière empêchant la pénétration ou la sortie de gaz et/ou de liquides dans ou hors du boîtier (20), et la couche de barrière en métal, en oxyde métallique et/ou en silicates étant reliée par liaison de matière à une surface de la coque de boîtier inférieure (20b) tournée vers la pluralité de cellules de stockage d'énergie (10) et à une surface de la coque de boîtier supérieure (20a) tournée vers la pluralité de cellules de stockage d'énergie (10).

2. Procédé selon la revendication 1,
le procédé présentant en outre les étapes suivantes :
- la fourniture et le thermoformage d'au moins une feuille (30) en matière plastique, et ce de manière à former une pluralité de cavités, chaque cavité étant conçue pour recevoir une cellule de stockage d'énergie (10),
une feuille (30) en matière plastique étant prévue respectivement entre les coques de boîtier inférieure et supérieure (20a, 20b) et la pluralité de cellules de stockage d'énergie (10).

3. Procédé selon la revendication 1 ou 2,
un nombre prédéterminé ou prédéterminable de cellules reliées étant séparé, et au moins le boîtier (20) et la pluralité de cellules de stockage d'énergie (10) formant un empilement de cellules (100'), et ce de telle sorte que deux cellules de stockage d'énergie (10) directement voisines sont respectivement pliées par l'intermédiaire des éléments de liaison (11a, 11b) associés de telle sorte qu'elles sont agencées l'une sur l'autre, notamment de telle sorte qu'une ligne de pliage en forme de serpentin est formée.

4. Procédé selon l'une quelconque des revendications 1 à 3,
le boîtier (20) renfermant hermétiquement la pluralité de cellules de stockage d'énergie (10).

5. Procédé selon l'une quelconque des revendications 1 à 4,
la coque de boîtier inférieure (20b) étant préformée, notamment préformée plastiquement, de préférence thermoformée, avant la fourniture, et ce de telle sorte que la coque de boîtier inférieure (20b) présente une pluralité de cavités qui reçoivent chacune une cellule de stockage d'énergie (10).

6. Procédé selon l'une quelconque des revendications 1 à 5,
au moins le boîtier (20) et la pluralité de cellules de stockage d'énergie (10) formant un empilement de cellules (100'), et ce en ce que les éléments de liaison (11a, 11b) sont respectivement pliés de telle sorte que deux cellules voisines sont agencées l'une au-dessus de l'autre.

7. Procédé selon l'une quelconque des revendications 1 à 6,
les cellules de stockage d'énergie (10) étant réalisées sous forme de Jelly-Rolls, et/ou
les cellules de stockage d'énergie (10) étant des cellules lithium-ion.

8. Procédé selon l'une quelconque des revendications 1 à 7,
chaque cellule de stockage d'énergie (10) présentant au moins un trou de remplissage et/ou un trou de dégazage.
